# EUROPEAN PATENT APPLICATION

(11) **EP 1 107 514 A2**
(43) Date of publication of application: **13.06.2001**
(21) Application number: 00310680.4
(22) Date of filing: 01.12.2000
(51) Int. Cl.: H04L 12/26, H04L 12/14, G06F 17/60

(54) **Billing method for client server systems and billing device for client server systems**

(30) Priority: 03.12.1999 JP 34547999
(71) Applicant: Kizna.com Inc., Delaware 19801 (US)
(72) Inventor: Miyazawa, Takeo, Mitaka-shi, Tokyo 181-0013 (JP)
(74) Representative: Brown, Kenneth Richard

(57) **Abstract**

The object of the present invention is to provide a novel mode of software sales that did not previously exist and to reduce sales costs. This invention relates to a billing method/device for a client-server system in which a plurality of client computers perform collaborative work through a server computer. According to the invention, a server computer with preinstalled software for performing collaborative work is prepared; the operation of the abovementioned server computer is monitored; the running expenses are calculated according to the obtained operating status; the calculated running expenses are input to a billing computer; and the expenses are billed to a server administrator based on the input running expenses. Thereby, it becomes possible to have collaborative work among a plurality of client computers without collecting usage fees from the clients.

## Description

### BACKGROUND OF THE INVENTION

### 1. Field of the Invention

The present invention relates to a billing method for a client-server system and a billing device for a client-server system for having a plurality of client computers carry out collaborative work through a server computer.

### 2. Description of the Related Art

Conventional software sales modes include (1) the method in which software is packaged and sold through a storefront such as a computer shop, (2) the method in which software is advertised on the Internet or in magazines and sold by mail order, and (3) the method in which software is placed on a server, downloaded, and the fee is settled later by remittance from the user or by credit card.

The first and second methods cannot be realized without distribution channels and related costs are by no means low. In the third method, the administrative burden on the software provider becomes large because the software provider and the user deal directly with each other.

### SUMMARY OF THE INVENTION

It is an object of the present invention to resolve these problems and to provide a billing method for a client-server system and a billing device for a client-server system that can provide a low-cost mode of software sales.

The present invention is a billing method for a client-server system, for having a plurality of client computers carry out collaborative work through a server computer, comprising: a step for installing software to enable collaborative work on the abovementioned server computer; a step for inputting the initial expenses relating to the abovementioned installation step to a billing computer; a step for billing the expenses to a server administrator based on the input initial expenses; a step for monitoring the operations of the abovementioned server computer; a step for calculating the running expenses according to the operating mode obtained by the abovementioned monitoring step; a step for inputting the calculated running expenses to the billing computer; and a step for billing the expenses to a server administrator based on the input running expenses; wherein collaborative work by a plurality of client computers is made possible without the collection of usage fees from the client.

The present invention is a billing method for a client-server system, for having a plurality of client computers carry out collaborative work through a server computer, comprising: a step for preparing a server computer having preinstalled software for collaborative work; a step for monitoring the operations of the abovementioned server computer; a step for calculating the running expenses according to the operating mode obtained by the abovementioned monitoring step; a step for inputting the calculated running expenses to the billing computer; and a step for billing the expenses to a server administrator based on the input running expenses; wherein collaborative work by a plurality of client computers is made possible without the collection of usage fees from the client.

The recording medium relating to the present invention is a medium for recording programs for causing a computer to carry out the abovementioned method.

Such a storage medium may be, for example, a floppy disk, a hard disk, magnetic tape, a photomagnetic disk, a CD-ROM, DVD, ROM cartridge, RAM memory cartridge with a battery backup, flash memory cartridge, or non-volatile RAM cartridge.

The present invention may also include telecommunications media like wire communications media such as telephone circuits or wireless communications media such as microwave circuits. The Internet is also included in the communications media as referred to herein.

"Medium" as used herein is for recording information (mainly digital data and programs) by some type of physical means and is able to cause processing devices such as computers or dedicated processors to perform prescribed functions. In short, the medium may take any form so far as it is able to download programs to computers by any means and to cause them to execute prescribed functions.

The present invention is a billing device for a client-server system, for having a plurality of client computers carry out collaborative work through a server computer, comprising: a software installation portion for installing software; a server monitoring portion for monitoring the operating mode of the server to which software was installed; and a bill issuing portion for calculating and performing billing processes for the initial expenses relating to the installed software, as well as calculating and performing billing processes for the running expenses corresponding to the operating mode of the server obtained from the abovementioned server monitoring portion.

With the method and device relating to the present invention, a user (client) can freely use this software without charge because expenses are billed to the server administrator. In other words, clients can immediately engage in collaborative work just with the installation of software for collaborative work to the server. Consequently, users are saved the trouble of installing software to their own computers. Also, clients are not limited. In case of collaborative work among an unspecified large number of clients, the aspects that the software is free of charge and that users are not limited are major advantages. In consideration of performing electronic transactions through the Internet, in some cases, the transaction becomes easier to use if specified software is used. For example, while a plurality of users are viewing a web site of a product or service provider at the same time, the users may decide upon the products and services while conferring through that screen. Because this type of function is provided by special software, it was conventionally necessary for each of the users to install this software. With the present invention, however, this is not necessary. In this way, the present invention is expected to play a major role in the popularization of electronic transactions.

The server administrator is a service provider or provider dealer and provides services as a standard practice, while collecting connection fees from electronic transaction providers and clients including Internet users. The software expenses and maintenance expenses for operating the server are overhead expenses for the server administrator and the administrator has no particular resistance to the payment of an appropriate amount of money. This aspect is different from clients including general users. It is believed that general users are very resistant to paying these expenses. With this invention, however, expenses are collected from the server administrator and not from the general clients, and it will be easily accepted by both server administrators and general clients. This is because service providers can recover overhead expenses from sales of goods and services and server administrators can recover expenses in terms of access fees and usage fees from general users. An advantage is that a server administrator can acquire many users by publicizing the convenience of the software on its server.

For example, consider the case of a normal storefront selling goods over the Internet. This store rents a server from a provider, it develops a web site, provides product information to clients accessing the web site, receives orders from clients, and sends the products. In this case, when customized software for providing product information and taking orders is necessary, it is difficult to have each of the clients acquire the software one by one. That difficulty is eliminated by placing the software on the server.

Meanwhile, this invention provides a previously nonexistent sales channel for software to software providers. Conventional software sales modes include (1) the method in which software is packaged and sold through a storefront such as a computer shop, (2) the method in which software is advertised on the Internet or in magazines and sold by mail order, and (3) the method in which software is placed on a server, downloaded, and remittance is later received from the user and settled by credit card. The first and second methods cannot be realized without distribution channels and related costs are by no means low. In the third method, the administrative burden on the software provider becomes large because the software provider and the user deal directly with each other.

The present invention is completely different from the first, second, and third methods, and business through a server can be realized without the disadvantages of the abovementioned first through third method. With the present invention, distribution channels are not necessary and costs become low. Also, the administrative burden for collecting fees also becomes very low. In particular, the server can be automatically monitored by a computer; this can provide an expense billing system with the same convenience as automatic debits for public utilities fees.

Following is a summary of the above discussion.

### Advantages for the client (user)

Convenient software can be used without charge. In particular, collaborative work can be very easily performed with an unspecified large number of clients.

### Advantages for the server administrator (provider)

A greater number of services can be provided to clients. The provider can publicize the software provided and acquire users.

### Advantages for the software provider

Unlike conventional sales methods, software can be supplied through new and low-cost channels and the investment can be recovered.

### BRIEF DESCRIPTION OF THE DRAWINGS

Figure 1 is a block diagram of the billing device for a client-server system relating to an embodiment of the present invention;
Figure 2 is a flowchart for the billing method of the client-server system relating to an embodiment of the present invention; and
Figure 3 is an overall diagram of a computer network including the billing device for the client-server system relating to an embodiment of the present invention.

### DESCRIPTION OF THE PREFERRED EMBODIMENTS

The embodiments of the present invention are explained using the drawings.

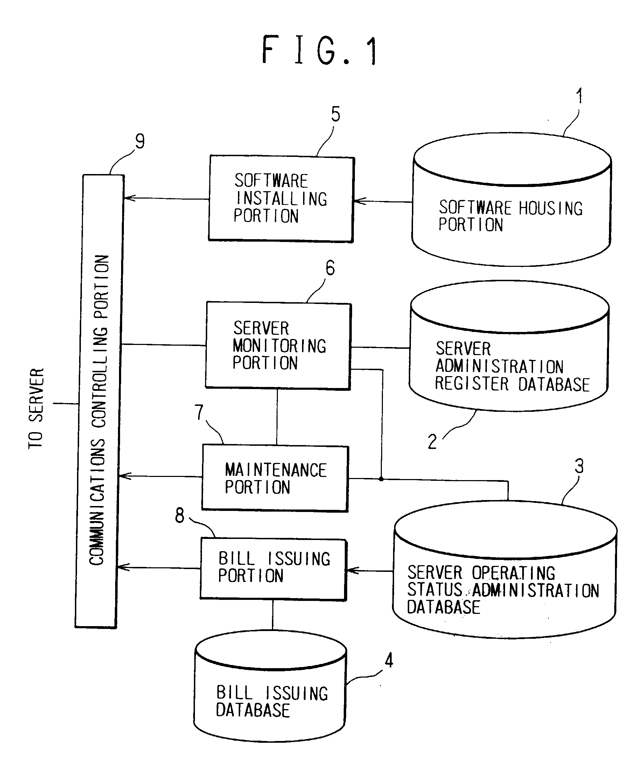

Figure 1 is a block diagram of the billing device for a client-server system relating to an embodiment of the present invention.

In Figure 1, 1 shows the software housing portion to which the software to be installed on the server is stored in advance; 2 shows a server administration register database for storing information such as the IP address of the server to which the software was installed, the installation date, and the type of software installed; 3 shows a server operation status administration database for storing the operation status of the server to which the software was installed; 4 shows a bill issuing database for storing data for the issuing of bills to the administrator of the server to which the software was installed, and the contents of the bills issued.

The server administration register 2 stores the IP address of the server, the hardware type, the server administrator, the network administrator, contents of contracts relating to the software provided, the installation date, and the type of software installed.

The server operating status administration database 3 stores the operating situation of the server (including information such as server downtime), the operating situation of the software installed on the server (including information such as whether the software is operating normally or whether operation faults due to bugs have occurred), software version information, and software maintenance information (including information such as whether bugs have been patched).

The bill issuing database 4 stores the amount of the bill for the initial expenses, whether this bill has been issued or not, the time of the bill, billed party, the amount of the bill for running expenses (including licenses and usage fees), whether this bill has been issued or not, the time of the bill, the cumulative number of bills, and the billed party.

In the same figure, 5 shows the software installing portion for reading the software to be installed from the software housing portion 1 and performing the installation to the prescribed server. The software installing portion stores information such as the IP address of the pertinent server to the server administration register database 2 once the installation is complete. 6 shows a server monitoring portion 6 for referencing the contents of the server administration register database 2, while monitoring the operating situation of the server to which the software was installed. The server monitoring portion 6 stores the monitoring results to the server operating status administration database 3. 7 shows the maintenance portion 7 for performing maintenance of the software installed to the pertinent server periodically or whenever necessary. The maintenance portion 7 receives the monitoring results, such as an operation stoppage caused by the installed software, from the server monitoring portion 6 and performs maintenance, while periodically performing maintenance with reference to the contents of the server operating status administration database 3. 8 shows the bill issuing portion which references the server operating status administration database 3 and issues bills, while storing the contents of the issued bills to the bills issuing database 4. 9 shows the communications controlling portion 9 for communicating with the server.

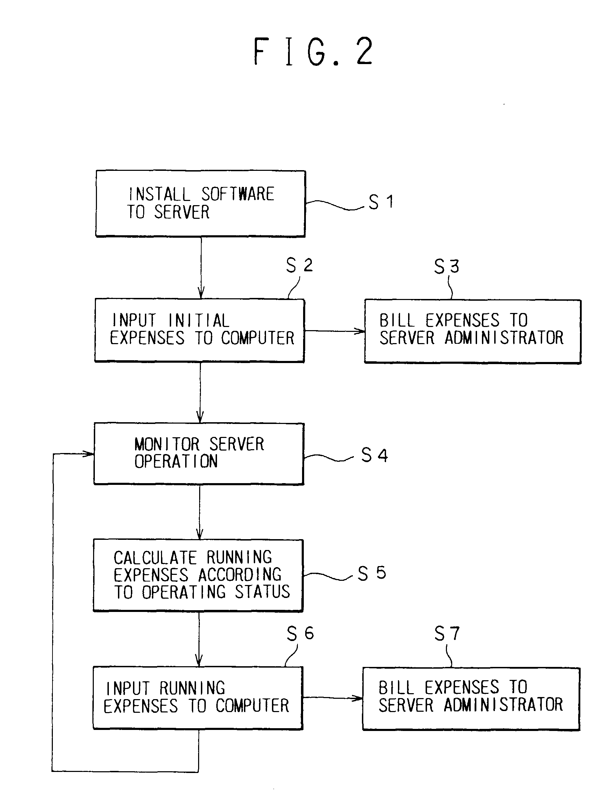

Figure 2 is a flowchart of the billing method for a client-server system relating to an embodiment of the present invention.

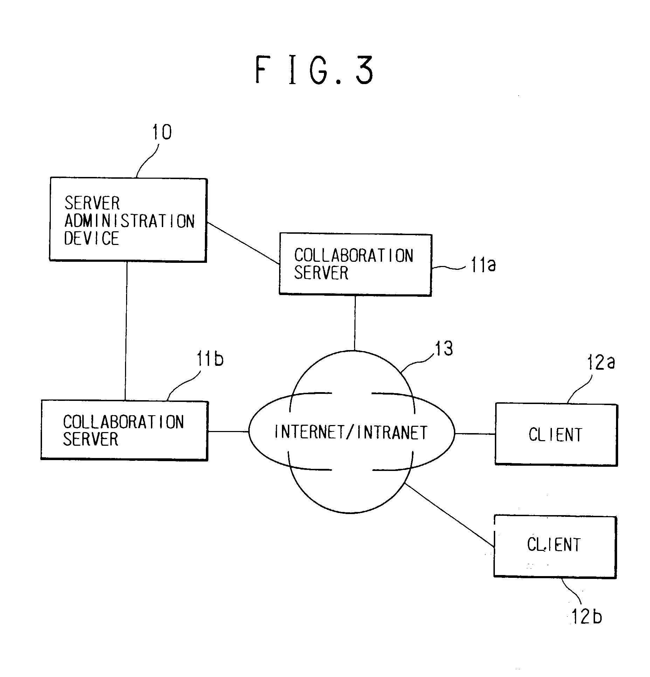

Figure 3 shows an example of the case where this billing device for the client-server system is applied to an Internet/intranet. This figure includes collaboration servers lla, llb used in the case of performing collaborative work among a plurality of clients 12a, 12b. A billing device 10 for a client-server system is connected to these servers 11a, 11b. In other words, software is installed to the servers 11a, 11b, while the operation of the software is monitored with this billing device 10 for a client-server system.

Next, the operation is explained with reference to Figure 2.

Install software to the server (S1).

Input the initial expenses relating to installation to the computer (S2). The initial expenses are determined by the contract. For example, in the case of an intranet server, the expenses are determined according to the size of the network and the number of client computers. In addition, expenses for the installation itself and other actual costs are calculated. The computer calculates the amount of money to be billed as initial expenses based on the input expenses.

Bill the amount of money calculated in Step S2 to the server administrator (S3). The server administrator is the company that owns the Internet or a provider company. In Figure 1, the bill for expenses may also be made by email or the like. Of course, it is also possible to send a normal bill by mail, use a credit card, or a bank debit.

Monitor the operation of the server to which the software has been installed (S4). This is done in order to calculate the amount of expenses billed according to the operating situation of the server. Also, this is done in order to monitor whether the software is operating normally. For example, in the case where an error occurs due to a bug or other reason, the maintenance portion 7 works to recover the system by applying patches or the like. Also, version upgrades are made as necessary. Actual monitoring methods used include logging into the server by telnet or the like and checking the operating status, installing monitoring software to the server and periodically receiving notifications of operating status from the software, or the method in which the server monitoring portion 6 accesses the server as a client and checks the operation of the software.

Calculate the running expenses according to the operating status (S5). The running expenses are determined according to the contract. For example, a set amount is billed each month. A metering system based on the number of users may also be used. In the case where the software has bugs and service cannot be provided, the amount billed may be reduced according to that time period.

Input the running expenses following installation to the computer (S6). The computer calculates the amount to be billed as running expenses based on the input expenses.

Bill the amount of money calculated in Step S6 to the server administrator (S7). As in Step S3, the bill for expenses may also be made by email or the like. Of course, it is also possible to send a normal bill by mail, use a credit card, or a bank debit.

In the explanation above, the explanation concerned a procedure for installing software to the server; however, software can also be preinstalled to a server in the factory. In this case, the processing from Steps S1 to S3 in Figure 2 is unnecessary.

Part of the process described above may be performed manually. With the device in Figure 1, software can be installed automatically to the server by the software installing portion 5, software can be maintained automatically by the maintenance portion 7, and the issuing of bills by the bill issuing portion 8 can be automated. However, part or all of these processes may also be performed manually.

The present invention is not limited by the embodiment discussed above and various changes may be made within the scope of the invention noted in the claims. Needless to say, these also fall within the scope of the present invention.

Also, in this specification, "means" does not necessarily mean physical means and includes the case where the functions of the various means are realized with software. Furthermore, the functions of one means may be realized with two or more physical means and the functions of two or more physical means may be realized by one physical means.

## Claims

1. A billing method for a client-server system for having a plurality of client computers perform collaborative work through a server computer, comprising:
a step for installing software for performing collaborative work to said server computer;
a step for inputting initial expenses relating to said installation step to a billing computer;
a step for billing expenses to a server administrator based on the input initial expenses;
a step for monitoring the operation of said server computer;
a step for calculating the running expenses according to the operating status obtained by said monitoring step;
a step for inputting the calculated running expenses to a billing computer; and
a step for billing expenses to a server administrator based on the input running expenses;
wherein collaborative work among a plurality of client computers is made possible without collecting usage fees from clients.

2. The billing method for a client-server system according to claim 1, characterized in that the expenses are determined according to the size of the network and/or the number of client computers.

3. The billing method for a client-server system according to claim 1, characterized in that said step for monitoring the operation of said server computer is performed by logging into the server by telnet and checking an operating status of said server computer.

4. The billing method for a client-server system according to claim 1, characterized in that said step for monitoring the operation of said server computer is performed by installing monitoring software to said server and periodically receiving notifications of operating status from the software.

5. The billing method for a client-server system according to claim 1, characterized in that said step for monitoring the operation of said server computer is performed by accessing said server as a client and checking an operation of the software.

6. A billing method for a client-server system for having a plurality of client computers perform collaborative work through a server computer, comprising:
a step for preparing a server computer to which software for performing collaborative work has been installed in advance;
a step for monitoring the operation of said server computer;
a step for calculating the running expenses according to the operating status obtained by said monitoring step;
a step for inputting the calculated running expenses to a billing computer; and
a step for billing expenses to a server administrator based on the input running expenses;
wherein collaborative work among a plurality of client computers is made possible without collecting usage fees from clients.

7. The billing method for a client-server system according to claim 6, characterized in that said step for monitoring the operation of said server computer is performed by logging into the server by telnet and checking an operating status of said server computer.

8. The billing method for a client-server system according to claim 6, characterized in that said step for monitoring the operation of said server computer is performed by installing monitoring software to said server and periodically receiving notifications of operating status from the software.

9. The billing method for a client-server system according to claim 6, characterized in that said step for monitoring the operation of said server computer is performed by accessing said server as a client and checking an operation of the software.

10. A billing device for a client-server system for having a plurality of client computers perform collaborative work through a server computer, comprising:
a software installing portion for installing software;
a server monitoring portion for monitoring the operating status of the server to which the software is installed; and
a bill issuing portion for calculating the initial expenses relating to the installed software and performing billing processes, while calculating running expenses according to the operating status of the server obtained from said server monitoring portion and performing billing processes.

11. A billing device for a client-server system for having a plurality of client computers perform collaborative work through a server computer, comprising:
a software housing portion to which the software to be installed on the server is stored in advance;
a software installing portion stores information such as the IP address of the pertinent server to the server administration register database 2 once the installation is complete;
a server administration register database for storing information including IP address of the server to which the software is installed, installation date, and the type of software installed;
a server monitoring portion for referencing the contents of the server administration register database, while monitoring the operating situation of the server to which the software is installed;
a server operation status administration database for storing the operation status of the server to which the software was installed;
a bill issuing database for storing data for the issuing of bills to the administrator of the server to which the software was installed, and the contents of the bills issued;
a bill issuing portion which references said server operating status administration database and issues bills, while storing the contents of the issued bills to said bills issuing database.

12. The billing device for a client-server system according to claim 11, wherein said server administration register stores the IP address of the server, the hardware type, the server administrator, the network administrator, contents of contracts relating to the software provided, the installation date, and the type of software installed.

13. The billing device for a client-server system according to claim 11, wherein said server operating status administration database stores the operating situation of the server including information of server downtime, the operating situation of the software installed on the server, software version information, and software maintenance information.

14. The billing device for a client-server system according to claim 11, wherein said bill issuing database stores the amount of the bill for the initial expenses, whether this bill has been issued or not, the time of the bill, billed party, the amount of the bill for running expenses, whether this bill has been issued or not, the time of the bill, the cumulative number of bills, and the billed party.

15. The billing device for a client-server system according to claim 11, wherein said software installing portion stores information including the IP address of the pertinent server to said server administration register database 2 once the installation is complete.

16. The billing device for a client-server system according to claim 11, further comprising:
a maintenance portion for performing maintenance of the software installed to the pertinent server periodically or whenever necessary.

17. A memory medium in computer-readable form storing a program for causing a computer to implement a billing method for a client-server system for having a plurality of client computers perform collaborative work through a server computer, comprising:
a step for installing software for performing collaborative work to said server computer;
a step for inputting initial expenses relating to said installation step to a billing computer;
a step for billing expenses to a server administrator based on the input initial expenses;
a step for monitoring the operation of said server computer;
a step for calculating the running expenses according to the operating status obtained by said monitoring step;
a step for inputting the calculated running expenses to a billing computer; and
a step for billing expenses to a server administrator based on the input running expenses;
wherein collaborative work among a plurality of client computers is made possible without collecting usage fees from clients.

18. A memory medium in computer-readable form storing a program for causing a computer to implement a billing method for a client-server system for having a plurality of client computers perform collaborative work through a server computer, comprising:
a step for preparing a server computer to which software for performing collaborative work has been installed in advance;
a step for monitoring the operation of said server computer;
a step for calculating the running expenses according to the operating status obtained by said monitoring step;
a step for inputting the calculated running expenses to a billing computer; and
a step for billing expenses to a server administrator based on the input running expenses;
wherein collaborative work among a plurality of client computers is made possible without collecting usage fees from clients.

19. A computer program comprising computer program code means for performing all the steps of the billing method of any one of claims 1 to 10 when said program is run on a computer.
